# EUROPÄISCHE PATENTSCHRIFT

(11) **EP 0 307 683 B1**
(45) Veröffentlichungstag und Bekanntmachung des Hinweises auf die Patenterteilung: **04.08.1993**
(21) Anmeldenummer: 88113915.8
(22) Anmeldetag: 26.08.1988
(51) Int. Cl.: C08J 7/04, C08G 61/12, C09J 7/02

(54) **Verfahren zur antistatischen Ausrüstung von Schmelzkleber-Schichten**
Process for the antistatic treatment of hot melt adhesive layers
Procédé pour le traitement antistatique de couches d'un adhésif par fusion

(30) Priorität: 05.09.1987 DE 3729875
(43) Veröffentlichungstag der Anmeldung: 22.03.1989
(73) Patentinhaber: BAYER AG, 51368 Leverkusen (DE)
(72) Erfinder: Friedrich, Jonas, Dr., D-5100 Aachen (DE); Waldenrath, Werner, Dipl.-Ing., D-5000 Köln (DE)

(56) Entgegenhaltungen:
- EP-A- 0 206 133
- EP-A- 0 206 414
- GB-A- 2 169 608

## Beschreibung

Die Erfindung betrifft ein Verfahren zur Herstellung von mit einer antistatischen Schmelzkleber-Schicht versehenen Kunststoff-Formteilen.

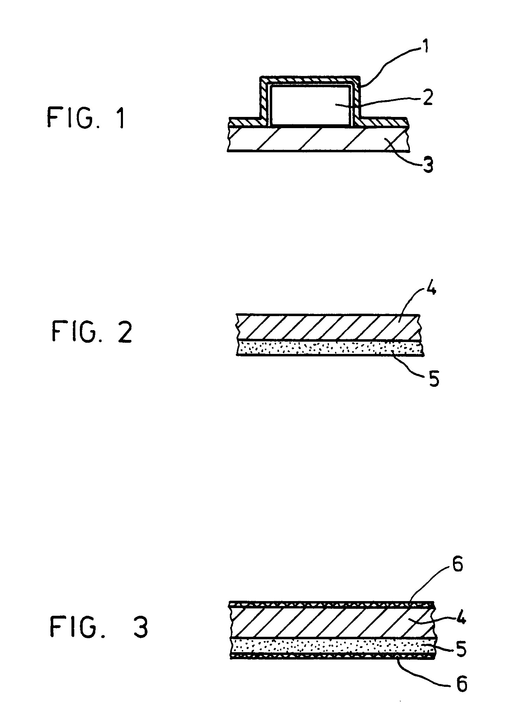

Für die Verpackung von Elektronikbauteilen werden zunehmend antistatisch ausgerüstete Verpackungsmaterialien eingesetzt, um eine Schädigung der Bauteile durch statische Aufladung zu verbindern. Der Oberflächenwiderstand dieser Verpackungsmaterialien soll zwischen R_{oB} = 10¹ Ω und 10⁹ Ω liegen. Speziell für kleine elektronische Bauelemente werden heute Gurtbänder (siehe Figur 1) eingesetzt. Diese Gurtbänder bestehen aus antistatisch ausgerüsteten Kunststoffbändern (1), in die durch Kaltverformen oder Tiefziehen kleine Mulden gepreßt werden, die die elektronischen Bauteile (2) aufnehmen. Um die Bauteile gegen ein Herausfallen zu sichern, werden die Mulden durch Aufsiegeln einer heißsiegelfähigen Kunststoff-Folie (3) verschlossen. Die als Gurtbänder verwendeten antistatisch ausgerüsteten Kunststoffbänder (1) können z.B. aus rußgefüllten Kunststoffen bestehen. Als Deckelfolie (3) werden mit einer Schmelzkleberschicht (5) versehene Kunststoff-Folien (4) verwendet (siehe Figur 2).

Bislang werden diese mit einer Schmelzkleber-Schicht versehenen Kunststoff-Folien nicht antistatisch ausgerüstet, weil befürchtet wird, daß die Schmelzkleberschichten durch eine Antistatik-Ausrüstung ihre Klebefähigkeit verlieren oder daß die Klebefähigkeit zumindest zu stark beeinträchtigt wird. Außerdem lassen die Erfahrungen mit der mäßigen thermischen Beständigkeit der bislang zur Antistatik-Ausrüstung von Kunststoffen verwendeten Antistatika erwarten, daß die Antistatik-Ausrüstung durch die beim Heißsiegeln (Schmelzen) üblicherweise angewendeten Temperaturen wenn nicht verlorengeht, so doch zumindest stark herabgesetzt wird. Da ein wirksamer Schutz der verpackten Teile vor elektrostatischer Aufladung jedoch nur dann gewährleistet ist, wenn nicht nur die Gurtbänder (1) sondern auch die Verschlußfolien (3) antistatisch ausgerüstet sind, bestand die Aufgabe, ein Verfahren zu finden, mit dessen Hilfe es gelingt, mit einer antistatischen Schmelzkleber-Schicht versehene Kunststoff-Folien herzustellen, die die an eine solche Verschlußfolie gestellten Anforderungen erfüllen, nämlich auch nach der Heißversiegelung noch einen Oberflächenwiderstand von 10¹ bis 10⁹ Ω und außerdem eine über die gesamte Oberfläche der Schmelzkleber-Schicht gleichmäßig verteilte Klebefähigkeit aufzuweisen. Auch die letztgenannte Anforderung, die gleichmäßig verteilte Klebefähigkeit, ist ein wichtiges Merkmal, da sich die Verschlußfolien automatisch, d.h. mit einer auf einen bestimmten Wert eingestellten Zugkraft wieder entfernen lassen müssen.

Überraschenderweise wurde gefunden, daß man solche mit einer antistatischen Schmelzkleber-Schicht einheitlicher Klebfähigkeit versehenen Kunststoff-Formteile wie Kunststoff-Folien, auf einfache, auch in technischem Maßstab durchführbarer Weise erhält, wenn man die mit der Schmelzkleber-Schicht versehenen Kunststoff-Formteile mit einer Bindemittel enthaltenden Lösung eines für die oxidative Polymerisation von 5- oder 6-gliedrigen heterocyclischen Verbindungen, die N oder S als Heteroatom enthalten, geeigneten Oxidationsmittels beschichtet und die so erhaltene Beschichtung anschließend mit einer Lösung der 5- oder 6-gliedrigen heterocyclischen Verbindung behandelt, das Lösungsmittel entfernt und mit wasser wascht.

Auf diese Weise werden mit einer antistatischen Schmelzklebebeschichtung versehene, gegebenenfalls antistatisch ausgerüstete Kunststoff-Folien erhalten, die die an Verschlußfolien für die Heißsiegelung gestellten Anforderungen erfüllen, die nämlich eine über die gesamte Schmelzkleber-Schicht gleichmäßig verteilte hohe Klebefähigkeit und gleichzeitig Oberflächenwiderstandswerte im Bereich von 10² bis 10⁸ Ω aufweisen.

Die nach dem erfindungsgemäßen Verfahren erhältlichen Antistatik-Beschichtungen der Schmelzkleber-Schichten weisen weiterhin den Vorteil auf, daß sie transparent sind und deshalb bei Verwendung transparenter Schmelzkleber-Schichten und Trägerfolien mit einer antistatischen Schmelzkleber-Schicht versehene transparente Verschlußfolien ergeben, die eine optische Kontrolle der versiegelten Kunststoffverpackungen erlauben.

Die Erfindung betrifft daher ein Verfahren zur Herstellung von mit einer antistatischen Schmelzkleber-Schicht versehenen Kunststoff-Formteilen, dadurch gekennzeichnet, daß man die Schmelzkleber-Schicht mit einer Lösung beschichtet, die ein für die oxidative Polymerisation von 5- oder 6-gliedrigen heterocyclischen Verbindungen, die Stickstoff oder Schwefel als Heteroatome aufweisen, geeignetes Oxidationsmittel und ein in Wasser nicht oder zumindest nur schwer lösliches organisches polymeres Bindemittel in einem organischen Lösungsmittel enthält, daß danach das organische Lösungsmittel aus der Beschichtung entfernt wird, die so erhaltene Beschichtung mit einer Lösung der 5- oder 6-gliedrigen heterocyclischen Verbindung in einem solchen organischen Lösungsmittel behandelt wird, in dem der Schmelzkleber und die auf diesen aufgebrachten Stoffe - Oxidationsmittel und organisches polymeres Bindemittel - nicht löslich sind, und daß die Beschichtung nach ihrer Behandlung mit der Lösung der heterocyclischen Verbindung und nach Entfernen des organischen Lösungsmittels mit Wasser gewaschen wird.

Die Verwendung von Polymerisaten von 5- oder 6-gliedrigen Heterocyclen, die Stickstoff oder Schwefel als Heteroatome aufweisen, insbesondere von Polypyrrol, zur antistatischen Ausrüstung von Kunststoffen ist bekannt; siehe z.B. EP-A-0 206 133, EP-A-0 206 414, DE-OS 33 21 281, DE-OS 35 44 957 und US-PS 4 604 427.

Gemäß dem in der EP-A-0 206 414 beschriebenen Verfahren werden poröse, gemäß dem in der US-PS 4 604 427 beschriebenen Verfahren nicht-poröse Kunststoff-Formteile zunächst mit einer Pyrrollösung getränkt; anschließend wird das auf die Oberfläche aufgebrachte Pyrrol durch Behandeln der Kunststoff-Formteile mit der Lösung eines Oxidationsmittels, z.B. einer wäßrigen FeCl₃-Lösung, zu Polypyrrol polymerisiert. Dieses Verfahren ist für eine Antistatik-Ausrüstung von Schmelzkleber-Schichten nicht verwendbar, weil das Oxidations-Bad schon nach kurzem Gebrauch durch schwarze Ausfällungen von aus ausgeschwämmtem Pyrrol entstandenem Polypyrrol unbrauchbar gemacht wird. Die Ausfällungen setzen sich bei einer Weiterverwendung des Bades auf der Oberfläche des Schmelzklebers ab und beeinträchtigen dessen Klebefähigkeit. Um zu einer antistatischen Schmelzkleber-Schicht gleichmäßiger Klebefähigkeit zu gelangen ist es deshalb erforderlich, das Oxidationsbad schon nach kurzem Gebrauch zu wechseln; dieser häufige Badwechsel macht das Verfahren jedoch unwirtschaftlich.

In der EP-A-0 206 133 und den DE-OSen 3 321 281 und 3 544 957 ist ein Verfahren zu Erzeugung leitfähiger Polypyrrolschichten auf Kunststoff-Formteilen beschrieben, gemäß dem die Formteile zunächst mit der Lösung des Oxidationsmittels und anschließend mit dampfförmigem oder in gelöster Form vorliegendem Pyrrol behandelt werden. Dieses Verfahren ist für die Antistatik-Ausrüstung von Schmelzkleber-Schichten ungeeignet, weil mit ihm entweder Schmelzkleber-Schichten erhalten werden, die bei ausreichender elektrischer Leitfähigkeit eine unzureichende Klebefähigkeit oder bei ausreichender Klebefähigkeit eine unzureichende elektrische Leitfähigkeit aufweisen.

Nach dem in der DE-OS 3 634 226 beschriebenen Verfahren werden Oxidationsmittel, Pyrrol und wasserlösliches Bindemittel gemeinsam auf die Kunststoff-Fläche aufgebracht. Die mit dieser Arbeitsweise erhaltenen antistatischen Schmelzkleber-Schichten weisen eine unzureichende Klebefähigkeit, insbesondere eine unzureichende Gleichmäßigkeit der Klebefähigkeit auf. Außerdem hat die so erhaltene antistatische Ausrüstung der Schmelzkleber-Schichten den Nachteil, daß sie nicht transparent ist.

Die in der DE-OS 3 440 914 zur antistatischen Ausrüstung von Kunststoff-Folien beschriebenen Charge-Transfer-(CT)-Komplexe, die sich z.B. von Tetrathiofulvalen und/oder Tetracyanochinodimethan ableiten, kommen wegen ihrer thermischen Instabilität für eine antistatische Ausrüstung von Schmelzkleber-Schichten nicht in Betracht.

Als 5- oder 6-gliedrige heterocyclische Verbindungen, die Stickstoff oder Schwefel enthalten können in dem erfindungsgemäßen Verfahren Thiophene, Furane und substituierte Pyrrole eingesetzt werden; bevorzugt wird Pyrrol verwendet.

Die Trockenfilmdicke, d.h. die Dicke der erfindungsgemäß aufzubringenden Antistatik-Beschichtung nach dem Trocknen, beträgt vorteilhaft 0,1 bis 3,0 µm, entsprechend einer Naßfilmdicke von 0,2 µm bis 60 µm. Innerhalb dieses Bereichs ist die Trockenfilmdicke in der Weise auf die Dicke der Schmelzkleber-Schicht abzustimmen, daß die Trockenfilmdicke der antistatischen Beschichtung höchstens 50 %, vorzugsweise 2 bis 50 % der Dicke der Schmelzkleber-Schicht beträgt. Größere Schichtdicken können sich nachteilig auf die Klebefähigkeit der Schmelzkleber-Schichten und auf die Transparenz und in einigen Fällen sogar nachteilig auf die elektrische Leitfähigkeit der Antistatik-Beschichtungen auswirken.

Erfindungsgemäß ist die baschichtete Schmelzkleber-Schicht zum Entfernen der nicht polymer gebundenen anorganischen Verbindungen mit Wasser zu waschen. Es wurde nämlich gefunden, daß diese nicht polymer gebundenen anorganischen Verbindungen zu einem Abbau des Binderpolymeren, insbesondere bei höheren Temperaturen, führen können. Durch das Auswaschen wird erreicht, daß auch bei thermischer Belastung keine Verfärbung der transparenten Antistatik-Beschichtung auf den Schmelzkleber-Schichten eintritt.

Das Lösungsmittel wird aus den Antistatik-Beschichtungen durch Verdunsten, gegebenenfalls bei erhöhter Temperatur und/oder unter vermindertem Druck entfernt.

Für die oxidative Polymerisation der 5- oder 6-gliedrigen heterocyclischen Verbindungen wie Pyrrol geeignete Oxidationsmittel sind bekannt und sind beispielsweise in der Veröffentlichung J. Am. Chem. Soc. 85, 454 (1963) beschrieben. Zur Durchführung des erfindungsgemäßen Verfahrens eignen sich besonders AlCl₃, AlCl₃-CuCl₂, Eisen-III-salze wie FeCl₃ und Fe(ClO₄)₃, SbCl₅, MoCl₅, H₂SO₅ und K₂S₂O₈; Kupfersalze wie Cu (BF₄)₂; es können auch Mischungen der genannten Verbindungen verwendet werden. Bevorzugt wird FeCl₃ eingesetzt.

Zur Durchführung des Verfahrens im technischen Maßstab werden für die oxidative Polymerisation des Pyrrols bevorzugt Salze des dreiwertigen Eisens verwendet, die sich von organischen Säuren oder organische Reste aufweisenden anorganischen Säuren ableiten.

Bei Verwendung dieser Eisensalze wird eine Korrosion der Gefäße und Geräteteile vermieden, in denen bzw. mit denen die erfindungsgemäße Beschichtung der Kunststoff-Formteile vorgenommen wird. Die Korrosion führt zu erheblichen Schwierigkeiten und zwar nicht nur zu einer Schädigung der Gefäße und Geräteteile, sondern auch zu einer Beeinträchtigung der Qualität der Polypyrrolbeschichtung durch die in die Beschichtungslösung gelangten Korrosionsprodukte.

Als bevorzugt eingesetzte Eisen-III-Salze organische Reste aufweisender anorganischer Säuren seien beispielsweise die Eisen-III-Salze der Schwefelsäurehalbester von C₁-C₂₀-Alkanolen, z.B. das Fe-III-Salz des Laurylsulfates genannt.

Als Eisen-III-Salze organischer Säuren seien beispielsweise genannt:
die Fe-III-Salze von C₁-C₂₀-Alkylsulfonsäuren, wie der Methan- und der Dodecansulfonsäure; aliphatischen C₁-C₂₀-Carbonsäuren wie der 2-Ethylhexylcarbonsäure; aliphatischen Perfluorcarbonsäuren, wie der Trifluoressigsäure und der Perfluoroctansäure; aliphatischen Dicarbonsäuren, wie der Oxalsäure und vor allem von aromatischen, gegebenenfalls durch C₁-C₂₀-Alkylgruppen substituierten Sulfonsäuren wie der Benzolsulfonsäure, p-Toluolsulfonsäure und der Dodecylbenzolsulfonsäure.

Es können auch Gemische dieser vorgenannten Fe-III-Salze organischer Säuren eingesetzt werden.

Geeignete, in Wasser nicht oder zumindest nur schwer lösliche organische polymere Bindemittel sind z.B. in organischen Lösungsmitteln lösliche synthetische organische Polymere wie Polyvinylacetat, Polycarbonat, Polyvinylbutyral, Polyacrylsäureester, Polymethacrylsäureester, Polystyrol, Polyacrylonitril, Polyvinylchlorid, Polybutadien, Polyisopren, Polyether, Polyester und Silicone; auch in organischen Lösungsmitteln lösliche Copolymere wie Styrol/Acrylsäureester-, Vinylacetat/Acrylsäureester- und Ethylen/Vinylacetat-Copolymerisate können verwendet werden. Bevorzugte Bindemittel sind Polyvinylacetat, Polycarbonat, Poly(meth)acrylsäureester und Copolymerisate der diesen Polymeren zu Grunde liegenden Monomeren.

Die Auswahl des organischen Lösungsmittels zur Herstellung der Oxidationsmittellösung richtet sich nach dem vorgesehenen Bindemittel, dem zu beschichtenden Schmelzkleber und, falls Schmelzkleber und vom Schmelzkleber nicht bedeckte Oberfläche des Kunststoff-Formteils gleichzeitig beschichtet werden sollen, auch nach dem Kunststoff aus dem das Formteil gefertigt ist. Geeignete Lösungsmittel müssen das Bindemittel und Oxidationsmittel gut lösen, dürfen aber zu keiner Schädigung des zu beschichtenden Schmelzklebers und gegebenenfalls des Kunststoff-Materials führen. Als Beispiele für Lösungsmittel mit den geforderten Eigenschaften seien genannt: aliphatische Alkohole wie Methanol, Ethanol, Isopropanol; aliphatische Ketone wie Aceton, Methylethylketon und Cyclohexanon; aliphatische Carbonsäureester wie Essigsäuremethyl- und Essigsäurebutylester; aromatische Kohlenwasserstoffe wie Toluol und Xylol; halogenierte Kohlenwasserstoffe wie Dichlormethan und Dichlorethan, aliphatische Nitrile wie Acetonitril.

Die einzelnen Lösungsmittel können als solche oder im Gemisch miteinander verwendet werden. In der Praxis haben sich, z.B. für die Beschichtung von Schmelzkleber-Schichten aus Polymethacrylaten und Ethylen-Vinylacetat-Copolymeren, Mischungen aus Aceton und Isopropanol (Gewichtsverhältnis 1:2) bewährt.

Der Gehalt der Beschichtungslösungen an Oxidationsmittel beträgt im allgemeinen 10 bis 200 Gew.-%, bezogen auf das verwendete Bindemittel. Die Gesamtkonzentration an Feststoffen (Oxidationsmittel und Bindemittel) liegt im allgemeinen zwischen 5 und 50 Gew.-%, bezogen auf das Gesamtgewicht der Lösung. Die Gesamtkonzentration der Lösungen hängt von dem angewandten Beschichtungsverfahren ab.

Geeignete Verfahren zur Beschichtung der antistatisch auszurüstenden Schmelzkleber-Schicht und gegebenenfalls der vom Schmelzkleber nicht bedeckten Oberfläche des Kunststoff-Formteils sind Aufsprühen, Aufrakeln, Bestreichen und Bedrucken (z.B. im Tiefdruck).

Die Behandlung der mit Oxidations- und Bindemittel beschichteten und getrockneten Schmelzkleber-Schichten mit den Lösungen der heterocyclischen Verbindungen erfolgt im allgemeinen bei Raumtemperatur, kann aber auch bei niedrigeren oder höheren Temperaturen vorgenommen werden. Die Auswahl der Lösungsmittel für die heterocyclische Verbindung richtet sich nach dem verwendeten Bindemittel, dem verwendeten Oxidationsmittel, dem Schmelzkleber und, bei gleichzeitiger Antistatik-Ausrüstung des Kunststoff-Trägers, auch nach dem Kunststoff. Das Lösungsmittel darf weder den zu beschichtenden Schmelzkleber noch den Kunststoff noch das aufgebrachte Bindemittel noch das Oxidationsmittel lösen. Lösungsmittel, die diesen Anforderungen entsprechen, sind z.B. aliphatische Kohlenwasserstoffe wie n-Hexan; aromatische Kohlenwasserstoffe wie Benzol oder Toluol; oder fluorierte Kohlenwasserstoffe wie 1,1,2-Trichlortrifluorethan. Es können auch Gemische dieser Lösungsmittel eingesetzt werden. Die Behandlung der beschichteten Materialien mit der Lösung der heterocyclischen Verbindung kann durch Eintauchen in die oder Aufsprühen der Lösung erfolgen. Die Behandlungsdauer beträgt im allgemeinen weniger als 1 Minute. In den meisten Fällen ist eine Einwirkungszeit von wenigen Sekunden ausreichend.

Die Konzentration der heterocyclischen Verbindung, z.B. des Pyrrols, in den Lösungen beträgt vorzugsweise 1 bis 50 Gew.-%, vorzugsweise 2 bis 10 Gew.-%, bezogen auf das Gewicht des Lösungsmittels.

Mit Hilfe des erfindungsgemäßen Verfahrens kann man auch gleichzeitig mit der Schmelzkleber-Schicht das Kunststoff-Formteil antistatisch ausrüsten, auf dem sich die Schmelzkleber-Schicht befindet. In diesem Fall wird nicht nur die Schmelzkleber-Schicht wie vorstehend beschrieben behandelt, sondern das gesamte, mit Schmelzkleber-Schicht versehene Formteil. Handelt es sich bei dem Formteil um eine Folie, so wird die in Figur 3 beschriebene antistatisch ausgerüstete und mit einer antistatischen Schmelzkleber-Schicht versehene Folie erhalten.

Als Trägermaterialien für die erfindungsgemäß auszurüstenden Schmelzkleber-Schichten kommen vor allem folgende Kunststoffe in Betracht: Polycarbonate, Polyamide, Polyurethane, Polyharnstoffe, Polyester, Polyether, Polypropylen, Polyoxyethylen, Polyvinylchlorid, Polymethacrylsäureester, Polystyrol oder Celluloseester und -ether.

Unter Schmelzklebern werden im Rahmen der Erfindung ohne chemische Reaktion abbindende Klebstoffe verstanden; zu diesen ohne chemische Reaktion abbindenden Klebstoffen gehören zum einen die eigentlichen Schmelzklebstoffe und zum andern Heißsiegelklebstoffe und Hochfrequenz(HF)-Schweiß-Hilfsmittel. Die eigentlichen Schmelzklebstioffe sind lösungsmittelfreie Klebstoffe, die in der Wärme und in flüssigem Zustand Werkstoffoberflächen gut benetzen können und an ihnen nach dem Erkalten und Erstarren fest haften. Während des Schmelzprozesses erleiden sie keine chemische Veränderung. Als Beispiele für eigentliche Schmelzklebstoffe seien genannt: schmelzbare, hochmolekulare Ethylen-Vinylacetat-Copolymere und Mischungen von etwa gleichen Teilen Ethylen-Vinylacetat-Copolymere mit Harzen (Balsamharzen, Colophoniumderivaten, Kohlenwasserstoffharzen) und Wachsen bzw. Paraffinen. Die Schmelzklebstoffe werden bei Temperaturen zwischen 100 und 190°C verarbeitet.

Die Heißsiegelklebstoffe und Hochfrequenz-Schweißhilfsmittel sind Beschichtungsklebstoffe die meist in Form von Klebstofflösungen auf die Kunststoffe aufgebracht werden. Vor dem Klebevorgang wird das Lösungsmittel entfernt. Die abgebundene lösungsmittelfreie Schicht wird durch Zufuhr von Wärme während der Siegelung aufgeschmolzen bzw. bei Hochfrequenz-Schweißhilfsmitteln durch Eigenerwärmung der Klebstoffschicht in einem Spannungsfeld aufgeschmolzen. Als Heißsiegelklebstoffe seien beispielsweise genannt: Copolymere des Vinylchlorids oder des Vinylidenchlorids, ferner Copolymere des Vinylacetats sowie Polymethacrylsäureester, Polyurethane und Polyester (siehe Ullmanns Enzyklopädie der technischen Chemie, 4. Auflage, Band 14, Seiten 236 bis 238).

### Beispiel 1

Eine handelsübliche, einseitig mit einem Schmelzkleber beschichtete Polyester-Folie "Heißsiegeltape 318H5" Handelsprodukt der Fa. Nitto; Gesamtdicke: ∼45 µm; Dicke der Schmelzklebeschicht: ∼25 µm) wurde beidseitig durch Aufrakeln mit einer Lösung aus 0,6 g FeCl₃, 19 g Aceton und 1 g Polyvinylacetat beschichtet (Naßfilmdicke: etwa 25 µm entsprechend einer Trockenfilmdicke von 1 bis 2 µm). Nach dem Abdunsten des Lösungsmittels wird die beschichtete Folie 2 Minuten in eine 5 %ige Lösung von Pyrrol in einem 1:1-Gemisch aus n-Hexan/Toluol getaucht. Nach dem Trocknen wird die Folie mit Wasser gewaschen.

Es wird eine transparente Folie erhalten; Oberflächenwiderstand der Folie auf beiden Seiten ∼10⁵ Ω .

Die Folie kann durch Heißsiegeln bei 120°C auf eine andere Kunststoff-Folie, z.B. eine Polyester-Folie haftfest aufgesiegelt werden.

### Beispiel 2

Es wird wie in Beispiel 1 beschrieben gearbeitet, mit dem einzigen Unterschied, daß anstelle von 0,6 g FeCl₃ 1,0 g FeCl₃x6H₂O verwendet wird.

Die erhaltene Folie weist auf beiden Seiten einen Oberflächenwiderstand von ∼10⁴ Ω auf und kann durch Heißsiegeln mit anderen Kunststoff-Folien verklebt werden.

### Beispiel 3

Es wird wie in Beispiel 1 beschrieben gearbeitet, nur wird anstelle von 1 g Polyvinylacetat 1,5 g Polymethylmethacrylat als Bindemittel eingesetzt.

Es wird eine transparente Folie erhalten, die auf beiden Seiten einen Oberflächenwiderstand von ∼10⁶ Ω aufweist.

Die Folie kann durch Heißsiegeln mit anderen Kunststoff-Folien, z.B. Polyester- und Polycarbonat-Folien verbunden werden.

## Patentansprüche

1. Verfahren zur Herstellung von mit einer antistatischen Schmelzkleber-Schicht versehenen Kunststoff-Formteilen, dadurch gekennzeichnet, daß man die Schmelzkleber-Schicht mit einer Lösung beschichtet, die ein für die oxidative Polymerisation von 5- oder 6-gliedrigen heterocyclischen Verbindungen, die Stickstoff oder Schwefel als Heteroatome aufweisen, geeignetes Oxidationsmittel und ein in Wasser nicht oder zumindest nur schwer lösliches organisches polymeres Bindemittel in einem organischen Lösungsmittel enthält, daß danach das organische Lösungsmittel aus der Beschichtung entfernt wird, die so erhaltene Beschichtung mit einer Lösung der 5- oder 6-gliedrigen heterocyclischen Verbindung in einem solchen organischen Lösungsmittel behandelt wird, in dem der Schmelzkleber und die auf diesen aufgebrachten Stoffe - Oxidationsmittel und organisches polymeres Bindemittel - nicht löslich sind, und daß die Beschichtung nach ihrer Behandlung mit der Lösung der heterocyclischen Verbindung und nach Entfernen des organischen Lösungsmittels mit Wasser gewaschen wird.

2. Verfahren nach Anspruch 1, dadurch gekennzeichnet, daß die 5- oder 6-gliedrige heterocyclische Verbindung Pyrrol ist.

3. Verfahren nach einem der Ansprüche 1 und 2, dadurch gekennzeichnet, daß die Dicke der auf die Schmelzkleber-Schicht aufgebrachten Antistatik-Beschichtung nach dem Trocknen 0,1 bis 3,0 µm beträgt.

4. Verfahren nach Anspruch 3, dadurch gekennzeichnet, daß die Dicke der auf die Schmelzkleber-Schicht aufgebrachten Antistatik-Beschichtung höchstens 50 % der Dicke der Schmelzkleber-Schicht beträgt.

5. Verfahren nach Anspruch 3, dadurch gekennzeichnet, daß die Dicke der auf die Schmelzkleber-Schicht aufgebrachten Schicht 2 bis 50 % der Dicke der Schmelzkleber-Schicht beträgt.

6. Verfahren nach einem der Ansprüche 1 bis 5, dadurch gekennzeichnet, daß das mit einer antistatischen Schmelzkleber-Schicht versehene Kunststoff-Formteil eine Kunststoff-Folie ist.

7. Verfahren nach einem der Ansprüche 1 bis 6, dadurch gekennzeichnet, daß man gleichzeitig mit einer Schmelzkleber-Schicht auch das Kunststoff-Formteil antistatisch ausrüstet, indem man die Schmelzkleber-Schicht und die nicht vom Schmelzkleber bedeckte Oberfläche des Kunststoff-Formteils mit der Lösung behandelt, die ein Bindemittel und das für die oxidative Polymerisation geeignete Oxidationsmittel enthält und die so erhaltene Beschichtung mit einer Lösung der 5- oder 6-gliedrigen heterocyclischen Verbindung behandelt.

8. Verfahren gemäß Anspruch 1, dadurch gekennzeichnet, daß man in Schritt 1 als Oxidationsmittel Salze des dreiwertigen Eisens verwendet, die sich von organischen oder organische Reste aufweisenden anorganischen Säuren ableiten.

## Claims

1. A process for the production of plastic mouldings provided with an antistatic hotmelt adhesive layer, characterized in that the layer of hotmelt adhesive is coated with a solution containing an oxidising agent suitable for the oxidative polymerization of 5- or 6-membered heterocyclic compounds with nitrogen or sulfur as hetero atoms and a water-insoluble or at least sparingly water-soluble organic polymeric binder in an organic solvent, the organic solvent is then removed from the coating, the coating thus obtained is treated with a solution of the 5- or 6-membered heterocyclic compound in an organic solvent in which the hotmelt adhesive and the substances applied thereto - oxidizing agent and organic polymeric binder - are insoluble and the coating is washed with water after its treatment with the solution of the heterocyclic compound and after removal of the organic solvent.

2. A process as claimed in claim 1, characterized in that the 5- or 6-membered heterocyclic compound is pyrrole.

3. A process as claimed in any of claims 1 and 2, characterized in that, after drying, the thickness of the antistatic coating applied to the layer of hotmelt adhesive is 0.1 to 3.0 µm.

4. A process as claimed in claim 3, characterized in that the thickness of the antistatic coating applied to the layer of hotmelt adhesive is at most 50% of the thickness of the layer of hotmelt adhesive.

5. A process as claimed in claim 3, characterized in that the thickness of the layer applied to the layer of hotmelt adhesive is 2 to 50% of the thickness of the layer of hotmelt adhesive.

6. A process as claimed in any of claims 1 to 5, characterized in that the plastic moulding provided with an antistatic hotmelt adhesive layer is a plastic film.

7. A process as claimed in any of claims 1 to 6, characterized in that, when the hotmelt adhesive layer is applied, the plastic moulding is also antistatically treated by treating the hotmelt adhesive layer and that surface of the plastic moulding which is not covered by the hotmelt adhesive with a solution containing a binder and the oxidizing agent suitable for oxidative polymerization and treating the coating obtained with a solution of the 5- or 6-membered heterocyclic compound.

8. A process as claimed in claim 1, characterized in that salts of trivalent iron derived from organic acids or acids containing organic residues are used as oxidizing agent in step 1.

## Revendications

1. Procédé de production de pièces façonnées en matière plastique munies d'une couche antistatique d'adhésif fusible, caractérisé en ce qu'on revêt la couche d'adhésif fusible d'une solution qui contient un agent oxydant approprié pour la polymérisation par voie d'oxydation de composés hétérocycliques pentagonaux ou hexagonaux qui présentent de l'azote ou du soufre comme hétéro-atomes et, dans un solvant organique, un liant polymère organique qui est insoluble dans l'eau ou qui n'y est tout au moins que difficilement soluble, en ce que le solvant organique est ensuite chassé du revêtement, le revêtement ainsi obtenu est traité avec une solution du composé hétérocyclique pentagonal ou hexagonal dans un solvant organique dans lequel l'adhésif fusible et les substances appliquées sur ce dernier - agent oxydant et liant polymère organique - ne sont pas solubles, et en ce que le revêtement est lavé à l'eau après son traitement avec la solution du composé hétérocyclique et après élimination du solvant organique.

2. Procédé suivant la revendication 1, caractérisé en ce que le composé hétérocyclique pentagonal ou hexagonal est le pyrrole.

3. Procédé suivant l'une des revendications 1 et 2, caractérisé en ce que l'épaisseur du revêtement antistatique appliqué sur la couche d'adhésif fusible est égale à 0,1-3,0 µm après séchage.

4. Procédé suivant la revendication 3, caractérisé en ce que l'épaisseur du revêtement antistatique appliqué sur la couche d'adhésif fusible s'élève au maximum à 50 % de l'épaisseur de la couche d'adhésif fusible.

5. Procédé suivant la revendication 3, caractérisé en ce que l'épaisseur de la couche appliquée sur la couche d'adhésif fusible s'élève à 2-50 % de l'épaisseur de la couche d'adhésif fusible.

6. Procédé suivant l'une des revendications 1 à 5, caractérisé en ce que la pièce façonnée en matière plastique pourvue d'une couche antistatique d'adhésif fusible est une feuille en matière plastique.

7. Procédé suivant l'une des revendications 1 à 6, caractérisé par le fait qu'en même temps que l'apprêtage avec une couche d'adhésif fusible, on effectue également l'apprêtage antistatique de la pièce façonnée en matière plastique, en traitant la couche d'adhésif fusible et la surface de la pièce façonnée en matière plastique non revêtue de l'adhésif fusible avec la solution qui contient un liant et l'agent oxydant convenant pour la polymérisation par voie d'oxydation et on traite le revêtement ainsi obtenu avec une solution du composé hétérocyclique pentagonal ou hexagonal.

8. Procédé suivant la revendication 1, caractérisé en ce qu'on utilise comme agents oxydants dans la première étape des sels de fer trivalents qui sont dérivés d'acides organiques ou d'acides minéraux portant des restes organiques.
